# EUROPÄISCHE PATENTANMELDUNG

(11) **EP 2 980 437 A1**
(43) Veröffentlichungstag der Anmeldung: **03.02.2016**
(21) Anmeldenummer: 14179569.0
(22) Anmeldetag: 01.08.2014
(51) Int. Cl.: F16F 1/362, F02M 61/14

(54) **Schwingungsdämpfendes Befestigungssystem**

(71) Anmelder: Stop-Choc Schwingungstechnik GmbH & Co. KG, 71272 Renningen (DE)
(72) Erfinder: Schützle, Torsten, 70563 Stuttgart (DE)
(74) Vertreter: Schmid, Rudolf

(57) **Zusammenfassung**

Die Erfindung betrifft ein Schwingungsdämpfendes Befestigungssystem (8, 9) mit einem Gewindebolzen (10) mit einem Bolzenkopf (12), einem Gehäuse mit einer Bohrung zur formschlüssigen Befestigung des Gewindebolzens (10), einem Flansch (1) mit einem zur Bohrung koaxialen Durchlass (3) für den Gewindebolzen (10), und elastischen Elementen (4, 5) zwischen dem Flansch (1) und dem Gehäuse und/oder zwischen dem Gewindebolzen (10) mit dem Bolzenkopf (12) und dem Flansch (1). Die elastischen Elemente (4, 5) enthalten Ganzmetallkissen. Die Erfindung betrifft auch eine Anwendung des schwingungsdämpfenden Befestigungssystems (8, 9).

## Beschreibung

Die Erfindung betrifft ein schwingungsdämpfendes Befestigungssystem mit den Merkmalen des Oberbegriffs des Anspruchs 1 und eine Anwendung eines solchen schwingungsdämpfenden Befestigungssystems mit den Merkmalen des Oberbegriffs des Anspruchs 11.

Einspritzsysteme für Verbrennungsmotoren sind mit Hochdruckpumpen ausgestattet, die Kraftstoff auf ein hohes Druckniveau bringen, wobei moderne Hochdruckpumpen für schnelllaufende Verbrennungsmotoren hohes Druckniveau mittels Stößeln bei Frequenzen mit mehreren tausend Hertz bereit stellen. Die Hochdruckpumpen übertragen über ihre Befestigungen diese Frequenzen ihrer Stößel an die Gehäuse, an denen die Hochdruckpumpen befestigt sind, so dass nachteilige Vibrationen und störende Geräusche beim Betrieb der Verbrennungsmotoren entstehen können.

Dokument US 2003/006341 A offenbart eine schwingungsgedämpfte Befestigung mit einer Vielzahl elastomerer Elemente. Die Befestigung umfaßt einen ersten Träger, einen zweiten Träger und mindestens einen dritten Träger. Der zweite Träger ist von dem ersten Träger und der dritte Träger ist von dem ersten Träger beabstandet. Die Ausnehmungen zwischen den ersten und zweiten Trägern und den ersten und dritten Trägern enthalten elastomere Elemente zur Schwingungsdämpfung. Ein Befestigungselement hält die elastomeren Elemente zwischen den ersten und dritten Trägern und zwischen den ersten und zweiten Trägern so, daß die elastomeren Elemente Vibrationen dämpfen, die zwischen den ersten und zweiten Trägern übertragen werden. Diese schwingungsgedämpfte Befestigung ist konstruktiv aufwändig. Die für Schwingungsdämpfung relevanten Eigenschaften von Elastomeren variieren in den Temperaturintervallen, die an Verbrennungsmotoren anliegen, so dass mit dieser schwingungsgedämpften Befestigung des Standes der Technik die z. B. für Kraftfahrzeuge erwünschte Schwingungsdämpfung bei manchen Temperaturintervallen nicht erreicht wird.

Eine Aufgabe der Erfindung ist es, ein schwingungsdämpfendes Befestigungssystem für Aggregate an Gehäusen zu schaffen, mit dem über Temperaturintervalle, wie sie an Verbrennungsmotoren von z. B. Kraftfahrzeugen anliegen, auch bei Frequenzen mit bis zu mehreren tausend Hertz eine kontinuierlich hohe Schwingungsdämpfung erreichbar ist zur Vermeidung nachteiliger Vibrationen und störender Geräusche. Eine weitere Aufgabe der Erfindung ist es, eine Anwendung für eine solches schwingungsdämpfendes Befestigungssystem zu schaffen.

Die Lösung erfolgt mit einem schwingungsdämpfenden Befestigungssystem mit den Merkmalen des Anspruchs 1 und mit einer Anwendung für ein solches schwingungsdämpfendes Befestigungssystem mit den Merkmalen des Anspruchs 11.

Gemäß der Erfindung ist ein schwingungsdämpfendes Befestigungssystem für schwingungsgenerierende Aggregate an Gehäusen vorgesehen, bei dem das Befestigungssystem mit einem Gewindebolzen mit einem Bolzenkopf, das Gehäuse mit einer Bohrung zur formschlüssigen Befestigung des Gewindebolzens und ein Flansch des Aggregats mit einem zur Bohrung koaxialen Durchlass versehen ist zur Befestigung des Flanschs am Gehäuse mittels des Gewindebolzens. Das Aggregat ist z. B. ein Konverter, ein Steuergerät oder eine Hochdruckpumpe, die an dem Gehäuse eines Verbrennungsmotors von z. B. einem Kraftfahrzeug befestigt ist. Elastische Elemente sind zwischen dem Flansch und dem Gehäuse und zwischen dem Bolzenkopf und dem Flansch angeordnet. Erfindungsgemäß enthalten die elastischen Elemente vorzugsweise vorgespannte Ganzmetallkissen zur Schwingungsdämpfung zwischen Flansch und Gehäuse und zwischen dem Bolzenkopf und dem Flansch zur Entkopplung der Vibrationen zwischen Flansch und Gehäuse. Erfindungsgemäß liegt der Flansch des schwingungsgenerierenden Aggregats weder direkt an dem Gehäuse noch an dem Gewindebolzen an, sondern sowohl zwischen Flansch und Gehäuse als auch zwischen Flansch und Gewindebolzen sind die elastischen Elemente mit Ganzmetallkissen mit ausreichender Festigkeit für eine stabile Befestigung und mit hoher Dämpfungswirkung angeordnet. Die für Schwingungsdämpfung relevanten Eigenschaften der Ganzmetallkissen, die zu einem großen Teil aus Reibung innerhalb der Ganzmetallkissen resultieren, variieren mit der Temperatur nur minimal in den Temperaturintervallen, die an Verbrennungsmotoren anliegen, so dass die z. B. für Kraftfahrzeuge erwünschte Schwingungsdämpfung bei hoher Stabilität der Befestigung über alle an Verbrennungsmotoren anliegenden Temperaturintervalle erreicht wird.

Gemäß einer bevorzugten Ausgestaltung der Erfindung ist der Gewindebolzen eine Schraube und der Bolzenkopf ein Schraubenkopf oder eine Bolzenmutter. Die Bolzenmutter oder der Schraubenkopf ist durch das Ganzmetallkissen vom Flansch getrennt, so dass der Gewindebolzen entkoppelt ist von Vibrationen vom Flansch.

Gemäß einer weiteren bevorzugten Ausgestaltung der Erfindung ist die Bohrung eine Gewindebohrung, in die der Gewindebolzen oder die Schraube einschraubbar ist für eine Befestigung, die ausschließlich von der Flanschseite zugänglich ist.

Gemäß einer weiteren bevorzugten Ausgestaltung der Erfindung sind die Ganzmetallkissen ringförmig und zum Gewindebolzen koaxial für symmetrische Krafteinleitung und selbstzentrierende Montage.

Gemäß einer weiteren bevorzugten Ausgestaltung der Erfindung sind die Ganzmetallkissen jeweils aus Drahtgestricken gebildet.

Gemäß einer weiteren bevorzugten Ausgestaltung der Erfindung sind schalen- und/oder ringförmige Gehäuseteile aus Blech oder Kunststoff vorgesehen. Die Ganzmetallkissen sind von mindestens einem der schalen- und/oder ringförmigen Gehäuseteile aus Blech oder Kunststoff eingefasst.

Gemäß einer weiteren bevorzugten Ausgestaltung der Erfindung sind die schalen- und ringförmigen Gehäuseteile aus Tiefziehblech.

Gemäß einer weiteren bevorzugten Ausgestaltung der Erfindung sind die schalen- und ringförmigen Gehäuseteile insbesondere punktförmig lasergeschweißt an die Ganzmetallkissen.

Gemäß einer weiteren bevorzugten Ausgestaltung der Erfindung ist eine Buchse oder Vorspannhülse vorgesehen, die zwischen Ganzmetallkissen und Gewindebolzen oder Schraube und koaxial zu Gewindebolzen oder Schraube angeordnet ist.

Gemäß einer bevorzugten Ausgestaltung der Erfindung ist eine Anwendung des schwingungsdämpfenden Befestigungssystems vorgesehen, bei der das Gehäuse ein Zylinderkopf eines Verbrennungsmotors ist mit einer Kraftstoffeinspritzdüse, deren schwingungsgenerierendes Aggregat von einem Flansch gehalten wird, der Teil eines Common Rail Systems dieses Verbrennungsmotors ist.

Das erfindungsgemäße, schwingungsdämpfende Befestigungssystem wird im Folgenden anhand bevorzugter Beispiele mit Bezug auf die beigefügten Figuren beschrieben. Es zeigen:
Fig. 1 einen Querschnitt durch ein schwingungsdämpfendes Befestigungssystem gemäß der Erfindung,
Fig. 2 einen Querschnitt durch ein weiteres schwingungsgedämpfendes Befestigungssystem gemäß der Erfindung,
Fig. 3 eine gehäuseseitige Draufsicht auf ein schwingungsgedämpfendes Befestigungssystem gemäß der Erfindung, und
Fig. 4 einen Querschnitt durch eine Anwendung des schwingungsgedämpfenden Befestigungssystems gemäß der Erfindung.

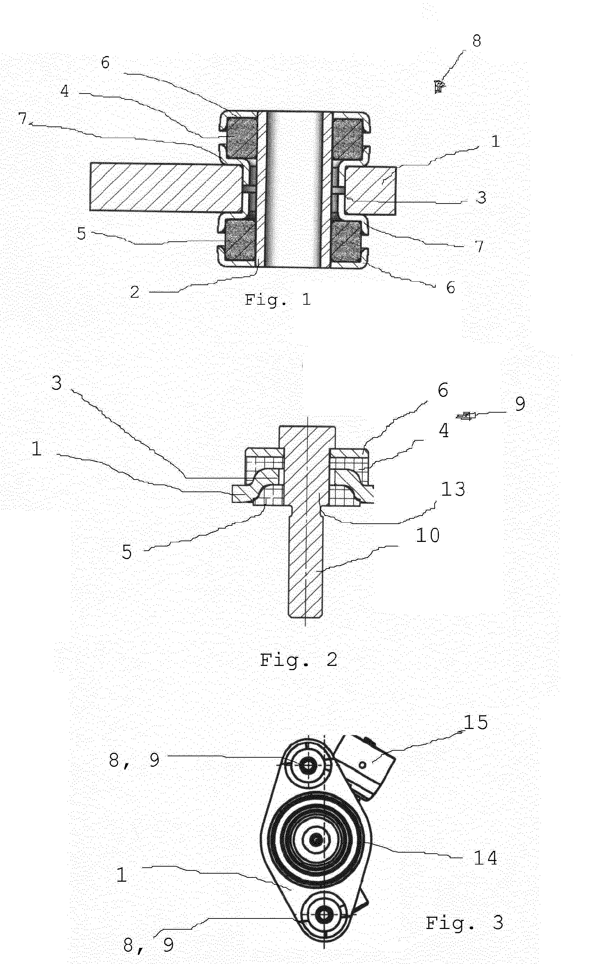

Fig. 1: Ein schwingungsdämpfendes Befestigungssystem 8 ist vorgesehen zur Montage eines Flanschs 1 einer Hochdruckpumpe an ein Gehäuse (nicht dargestellt) eines schnelllaufenden Verbrennungsmotors. Die Hochdruckpumpe erzeugt im Betrieb des schnelllaufenden Verbrennungsmotors Frequenzen mit 100-20000 Hertz.

Das schwingungsdämpfende Befestigungssystem 8 weist eine Buchse 2 auf, die koaxial ist zu einem im Wesentlichen zylindrischen Durchlass 3 mit einem Radius von ca. 15 mm in dem Flansch 1 mit einer Dicke von ca. 7 mm. Durch die vorzugsweise metallische Buchse 2 ist radial innen ein Gewindebolzen (nicht dargestellt) mit einer der Abmessungen M4 - M10 führbar. Für Gewindebolzen mit den Abmessungen M8 oder M6 hat die Buchse 2 eine Länge von ca. 22 mm und eine Öffnung mit einem Innendurchmesser von 8,2 mm.

Für eine formschlüssige Befestigung des Gewindebolzens ist eine Bohrung im Gehäuse vorgesehen. Für diese Befestigung kann die Bohrung des Gehäuses mit einer zum Gewindebolzen passenden Gewinde versehen sein oder eine Bolzenmutter (nicht dargestellt) ist vorgesehen zur Befestigung des Gewindebolzens auf der vom Flansch 1 abgewandten Seite des Gehäuses.

Koaxial zur Buchse 2 und beidseits des Flanschs 1 sind je ein Ganzmetallkissen 4, 5 vorgesehen. Mit ihrem Innenradius liegen die Ganzmetallkissen 4, 5 an in axialer Richtung äußeren Abschnitten der Buchse 2 an. Außenradien der Ganzmetallkissen 4, 5 erstrecken sich über den zylindrischen Durchlass 3 im Flansch 1. Die Ganzmetallkissen 4, 5 sind in axialer Richtung vorgespannt mit maximal 1/3 ihrer Höhe.

Die Ganzmetallkissen 4, 5 sind jeweils zwischen axial äußere und axial innere schalen- und ringförmige Gehäuseteile 6, 7 aus Tiefziehblech rotationssymmetrisch eingefasst. Die äußeren schalen- und ringförmige Gehäuseteile 6 schließen in axialer Richtung außen mit der Buchse 2 ab und erstrecken sich von der Buchse 2 radial nach außen im Wesentlichen parallel zum Flansch 1. An einem radialen Umfang der Ganzmetallkissen 4, 5 knicken die äußeren schalen- und ringförmigen Gehäuseteile 6 im Wesentlichen rechtwinklig ab zum Flansch 1 mit einer Schenkellänge, die ungefähr dem Dreifachen der Materialdicke der Gehäuseteile 6, 7 entspricht. Die Materialdicke der Gehäuseteile 6, 7 ist ca. 1 mm.

Innere schalen- und ringförmige Gehäuseteile 7 mit jeweils einem Abstand in axialer Richtung von ungefähr dem Zweifachen der Materialdicke der Gehäuseteile 6, 7 zu den rechtwinklig abgeknickten Schenkeln der Gehäuseteile 6 liegen außen an dem radialen Umfang der Ganzmetallkissen 4, 5 an und knicken entlang der einander zugewandten Seiten der Ganzmetallkissen 4, 5 im Wesentlichen rechtwinklig zur Buchse 2 hin ab bis zum inneren Umfang des im Wesentlichen zylindrischen Durchlasses 3 im Flansch 1. Entlang dem inneren Umfang des im Wesentlichen zylindrischen Durchlasses 3 und koaxial zur Buchse 2 knicken die inneren schalen- und ringförmigen Gehäuseteile 7 im Wesentlichen wiederum rechtwinklig ab aufeinander zu und entlang dem zylindrischen Durchlass 3, an den die inneren schalen- und ringförmigen Gehäuseteile 7 angepasst sind zur Vermeidung von radialem Spiel. Die inneren schalen- und ringförmigen Gehäuseteile 7 lassen zueinander einen Spalt von ca. 1 - 2 mm im zylindrischen Durchlass 3. Die am Flansch 1 anliegenden inneren schalen- und ringförmigen Gehäuseteile 7 sind überall beabstandet von der Buchse 2 oder dem Gewindebolzen und stützen sich ausschließlich über die Ganzmetallkissen 4, 5 an der Buchse 2 oder dem Gewindebolzen ab.

Für eine Buchse 2 mit einem Innendurchmesser von 8,2 mm ist der Außendurchmesser der schalen- und ringförmigen Gehäuseteile 6, 7 etwas über 22 mm. Die schalen- und ringförmigen Gehäuseteile 6, 7 sind punktförmig lasergeschweißt an die Ganzmetallkissen 4, 5. Der Gewindebolzen liegt mit seinem Bolzenkopf (nicht dargestellt) auf der Buchse 2 und auf dem sich radial nach außen erstreckenden Teil eines der zwei äußeren schalen- und ringförmigen Gehäuseteil 6 auf und das andere der zwei äußeren schalen- und ringförmigen Gehäuseteile 6 liegt mit dem sich radial nach außen erstreckenden Teil auf dem Gehäuse auf.

Fig. 2: Entsprechende Merkmale sind mit den Bezugszeichen aus Fig. 1 bezeichnet. Ein weiteres schwingungsdämpfendes Befestigungssystem 9 zur Montage eines Flanschs 1 einer Hochdruckpumpe an einem Gehäuse (nicht dargestellt) eines schnelllaufenden Verbrennungsmotors weist eine Schraube 10 auf, die koaxial ist zu einem im Wesentlichen zylindrischen Durchlass 3 mit einem Radius von ca. 10 mm in einem Flansch 1 mit einer Dicke von ca. 3 mm. Die Schraube 10 kann alternativ außerhalb des Gehäuses in einer Vorspannhülse (nicht dargestellt) geführt sein. Die Schraube 10 mit der Abmessung M6 des Gewindes mit einer Länge von ca. 20 mm für das Gehäuse hat einen Schraubenkopf 12 mit einer Höhe von 4 mm und einen Schaft 13 mit einer von den jeweiligen Wandstärken des Flansches 1 und des Gehäuses abhängigen Höhe von 8 - 16 mm.

Koaxial zur Schraube 10 und beidseits des Flanschs 1 sind ein schraubenkopfseitiges und ein gehäuseseitiges Ganzmetallkissen 4, 5 vorgesehen. Mit ihrem Innenradius liegen die Ganzmetallkissen 4, 5 an der Schraube 10 oder der Vorspannhülse an und sind voneinander in axialer Richtung der Schraube 10 durch den Flansch 1 getrennt. Außenradien von ca. 17 mm der Ganzmetallkissen 4, 5 erstrecken sich radial über den zylindrischen Durchlass 3 und den Flansch 1.

Zwischen dem schraubenkopfseitigen Ganzmetallkissen 4 und dem Schraubenkopf 12 ist ein ringförmiges Gehäuseteil 6 koaxial zur Schraube 10 angeordnet. Die Materialdicke des ringförmigen Gehäuseteils 6 in axialer Richtung ist ca. 1,5 mm. Die Materialdicke des schraubenkopfseitigen Ganzmetallkissens 4 in axialer Richtung ist ca. 3,5 tbd.

Das gehäuseseitige Ganzmetallkissen 5 liegt direkt auf dem Gehäuse auf. Die Materialdicke des gehäuseseitigen Ganzmetallkissens 5 in axialer Richtung ist ca. 4,1 tbd. Das gehäuseseitige Ganzmetallkissen 5 ist an seiner Anlagefläche zum Flansch 1 teilweise eingefasst von dem rotationssymmetrisch zum Gehäuse hin verformten Flansch 1. Die Anlagefläche des gehäuseseitigen Ganzmetallkissens 5 ist mit variablen Radien zwischen 1,6 mm - 1,9 mm an den rotationssymmetrisch verformten Flansch 1 angepasst.

Der Schaft 13 hat einen ca. 2 mm größeren Durchmesser als das Gewinde M6 der Schraube 10, so dass die Schraube 10 nur bis zu einer durch die Länge des Schafts 13 definierten Tiefe in das Gehäuse schraubbar ist für einen bestimmten Anpressdruck für Flansch 1 und die Ganzmetallkissen 4, 5.

Fig. 3: Entsprechende Merkmale sind mit den Bezugszeichen aus Fig. 1 oder 2 bezeichnet. Der Flansch 1 ist mit zwei schwingungsdämpfenden Befestigungssystemen 8 oder 9 in Bohrungen am Gehäuse befestigbar. Zwischen den schwingungsdämpfenden Befestigungssystemen 8, 9 sind zum Gehäuse gerichtete Elemente 14 der Hochdruckpumpe 15 angeordnet.

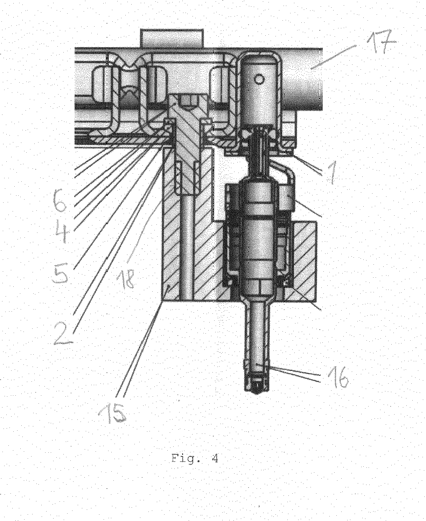

Fig. 4: Entsprechende Merkmale sind mit den Bezugszeichen aus Fig. 1 bis 3 bezeichnet. Das schwingungsdämpfende Befestigungssystem 9 umfasst den Flansch 1 als Teil eines Common Rail Systems 17 mit einer Kraftstoffeinspritzdüse 16 für einen Verbrennungsmotor. Das Gehäuse ist ein Zylinderkopf 15 des Verbrennungsmotors mit der Bohrung 18 für die Schraube 10. Der Flansch 1 der Kraftstoffeinspritzdüse 16 ist mit der Schraube 10 in der Bohrung 18 am Zylinderkopf 15 befestigt.

Die Schraube 10 ist in einer Buchse 2 durch den im Wesentlichen zylindrischen Durchlass 3 des Flanschs 1 geführt. Die Schraube 10 mit der Buchse 2 ist mit je einem Ganzmetallkissen 4, 5 zu beiden Seiten des Flanschs 1 gelagert. Zwischen dem schraubenkopfseitigen Ganzmetallkissen 4 und dem Schraubenkopf 12 ist das ringförmige Gehäuseteil 6 koaxial zur Schraube 10 angeordnet. Das gehäuseseitige Ganzmetallkissen 5 liegt koaxial zur Schraube 10 am Flansch 1 und an der Buchse 2 an. Der Flansch 1 liegt nicht am Zylinderkopf 15 an.

## Patentansprüche

1. Schwingungsdämpfendes Befestigungssystem (8, 9) mit
- einem Gewindebolzen (10) mit einem Bolzenkopf (12),
- einem Gehäuse mit einer Bohrung zur formschlüssigen Befestigung des Gewindebolzens (10),
- einem Flansch (1) mit einem zur Bohrung koaxialen Durchlass (3) für den Gewindebolzen (10), und
- elastischen Elementen (4, 5) zwischen dem Flansch (1) und dem Gehäuse und/oder zwischen dem Gewindebolzen (10) mit dem Bolzenkopf (12) und dem Flansch (1), **dadurch gekennzeichnet, dass** die elastischen Elemente (4, 5) Ganzmetallkissen enthalten.

2. Befestigungssystem (9) gemäß Anspruch 1, **dadurch gekennzeichnet, dass** der Gewindebolzen eine Schraube (10) ist und der Bolzenkopf ein Schraubenkopf (12) oder eine Bolzenmutter ist.

3. Befestigungssystem (8, 9) gemäß Anspruch 1 oder 2, **dadurch gekennzeichnet, dass** die Bohrung eine Gewindebohrung ist, in die der Gewindebolzen oder die Schraube (10) einschraubbar ist.

4. Befestigungssystem (8, 9) gemäß Anspruch 1, **dadurch gekennzeichnet, dass** die Ganzmetallkissen (4, 5) ringförmig und zum Gewindebolzen (10) koaxial sind.

5. Befestigungssystem (8, 9) gemäß Anspruch 1, **dadurch gekennzeichnet, dass** die Ganzmetallkissen (4, 5) Drahtgestricke sind.

6. Befestigungssystem (8, 9) gemäß Anspruch 1, **dadurch gekennzeichnet, dass** die Ganzmetallkissen (4, 5) in axialer Richtung vorgespannt sind.

7. Befestigungssystem (8, 9) gemäß Anspruch 4, **dadurch gekennzeichnet, dass** schalen- und/oder ringförmige Gehäuseteile (6, 7) aus Blech oder Kunststoff vorgesehen sind und die Ganzmetallkissen (4, 5) jeweils zwischen zwei dieser schalen- und/oder ringförmigen Gehäuseteile (6, 7) aus Blech oder Kunststoff eingefasst sind.

8. Befestigungssystem (8, 9) gemäß Anspruch 7, **dadurch gekennzeichnet, dass** die schalen- und/oder ringförmigen Gehäuseteile (6, 7) aus Tiefziehblech sind.

9. Befestigungssystem (8, 9) gemäß Anspruch 7, **dadurch gekennzeichnet, dass** die schalen- und/oder ringförmigen Gehäuseteile (6, 7) insbesondere punktförmig lasergeschweißt sind an die Ganzmetallkissen (4, 5).

10. Befestigungssystem (8, 9) gemäß Anspruch 1 oder 2, **dadurch gekennzeichnet, dass** eine Buchse (2) oder Vorspannhülse vorgesehen ist, die zwischen Ganzmetallkissen (4, 5) und Gewindebolzen oder Schraube (10) und koaxial zu Gewindebolzen oder Schraube (10) angeordnet ist.

11. Anwendung eines schwingungsdämpfende Befestigungssystems (9) gemäß einem der vorhergehenden Ansprüche, **dadurch gekennzeichnet, dass** das Gehäuse ein Zylinderkopf (15) eines Verbrennungsmotors ist mit einer Kraftstoffeinspritzdüse (16), deren schwingungsgenerierendes Aggregat von einem Flansch (1) gehalten wird, der Teil eines Gasoline- oder Common Rail Systems (17) ist.
